# EUROPEAN PATENT SPECIFICATION

(11) **EP 2 653 073 B1**
(45) Date of publication and mention of the grant of the patent: **03.02.2016**
(21) Application number: 13001878.1
(22) Date of filing: 11.04.2013
(51) Int. Cl.: A47G 9/02, F24D 13/02, F24D 19/10, H05B 1/02, H05B 3/34

(54) **Heating device having improved temperature regulation system**
Heizungsvorrichtung mit verbessertem Temperatursteuerungssystem
Dispositif de chauffage à système de régulation de température améliorée

(30) Priority: 17.04.2012 IT MI20120621
(43) Date of publication of application: 23.10.2013
(73) Proprietor: Tenacta Group S.p.A., 24052 Azzano S. Paolo (BG) (IT)
(72) Inventor: Morgandi, Arturo, 24052 Azzano San Paolo (BG) (IT); Caccia, Giorgio, 24052 Azzano San Paolo (BG) (IT)
(74) Representative: Contessini, Pier Carlo

(56) References cited:
- DE-A1- 4 141 224
- GB-A- 2 123 994
- GB-A- 2 320 374
- US-A- 4 658 119
- US-A1- 2011 052 517

## Description

### Field of the invention

The present invention relates to a heating device, such as electro-blanket, bed warmers, heating pad or heating mat; in particular it relates to a heating device provided with a regulation system to maintain its surface temperature within predetermined limits and to a method for vary such a temperature.

### State of the art.

Electro-blankets, heating pads, bed warmers, heating mats and the like, hereafter generically referred to as "heating devices" have long been known; they are electrical devices of various sizes that produce and transmit heat to the human body. Typically, these heating devices are provided within them of an electric circuit which, when activated, transmits heat to the user when he/she is in rest conditions, in bed or sitting. Generally, heating pad means a portable fabric device, of smaller dimensions than electro-blankets or bed warmers, such that it can be applied to specific parts of the body, such as on the belly, back, neck or the like.

Typically, such heating devices are constituted by a main body, the outer surface of which is such as to be placed in contact with the human body, and by a heating element positioned within such a main body.

Typically, in some of such conventional heating devices, the temperature of the heating element is kept constant by a suitable regulator which measures the heating element temperature by means of a temperature sensor, integrated into the device. Since this temperature sensor is integrated into the heating device, it measures the internal temperature of the heating device itself, while the temperature of the device outer surface will change in function of both the temperature of the heating element, and according to the environment condition wherein the heating device itself is located. Typically conventional devices are also provided with a timing device that, after a pre-determined time period during which higher surface temperature values are allowed, for example 90 minutes, reduces the temperature to lower values. Typically, for example in the case of heating pads, the timing device reduces the temperature so that the surface is lower than 50 °C, or alternatively switches off the device so as to fall within the temperature limits imposed by the safety standards IEC60335-2-17. An example of such a solution is described in DE 41 41 224 A1.

In view of the fact that the outer surface of the heating device is the portion that is in contact with the user, it is important that the temperature of such a surface is maintained within predetermined limits, comfortable and especially safe to the user.

Therefore, the technical problem faced by the Applicant of the present application is to provide a heating device comprising a suitable system able to maintain the outer surface temperature of the heating device within predetermined limits of efficiency and safety to the user, regardless of the usage and environmental conditions.

### Summary of the Invention

In a first aspect the present invention relates to a heating device such as that indicated in claim 1.

The Applicant of the present application has in fact surprisingly found that a heating device comprising a main body able to house in its interior at least one heating element, wherein said heating device comprises means to adjust the temperature TR of said heating element, characterized in that said heating device further comprises a system F able to determine the possible variation of said temperature TR of the heating element according to the amount of energy provided to said heating element,
is able to maintain the temperature of the outer surface of the heating device within predetermined limits of efficiency and safety to the user.

Said main body of the heating device of the present invention has an outer surface that comes into contact and interacts with the user, the temperature of said outer surface being subject to variation according to the environment conditions wherein the heating device is located.

The heating device of the invention therefore allows, through the system F, to act on the temperature TR of the heating element so that the temperature of the outer surface of the heating device itself can achieve and maintain for long time such temperature values to provide excellent heat transmission performance to the user's body to which the heating device of the present invention is applied, even when said heating device is used in the open air.

Preferably, said heating device is an electric-blanket, an electric warming bed, heating pad, a heat mat or any electrical device designed to heat a bed or other similar surface, or to heat the human body in a bed or otherwise at rest.

Preferably, said heating device is of any size, such as for example to completely cover a bed or a portion of it or a portion of the human body or a portion of a floor.

Preferably, said heating device is made of fabric, such as an envelope consisting of two fabric or felt layers glued or sewn together inside which at least one heating element is housed arranged in serpentine on all or part of the surface.

This way a greater diffusion of the heat provided from said heating element is obtained, thus allowing said heat to reach virtually all of the heating device in order to achieve a better heating of the surface to which the heating device is applied.

Preferably, said heating element comprises at least one electrical wire able to be connected to a battery or to a source of electrical energy, so as to be heated by it when activated.

Said means able to adjust the temperature TR of said heating element may be means known in the art. Preferably, said means comprise a switching device which activates/deactivates the heating element, a temperature measuring device of the heating element and a device directly activated by the user allowing the desired temperature selection.

Preferably, said measuring device is an electronic circuit that takes advantage of the impedance variation of the of the heating element as a function of its temperature or, alternatively, an electronic circuit that uses NTC type probes applied so as to be heated by the heating element itself.

Preferably, the maximum value of said temperature TR of the heating element housed inside the heating device of the present invention is pre-set to a value in the range between 50 °C and 90 °C, more preferably in the range between 60 °C and 85 °C.

This way, the outer surface temperature of the heating device of the present invention reaches temperatures comfortable to the user.

Preferably, said measuring device, in the case wherein the heating device for any reason reaches a temperature considered excessive to the user safety, sends a signal to a regulator E, which shall revert said temperature to said preset value.

Preferably, said system F, able to determine the possible variation of said temperature TR of the heating element according to the amount of energy provided to said heating element, induces a temperature regulator to possibly vary said temperature TR. More preferably, said system F induces said regulator E to possibly varying said temperature TR.

In a first embodiment, said system F is able to determine the possible variation of said temperature TR of the heating element according to the amount of time taken to provide a pre-determined amount of said energy to the heating element itself.

Preferably, said system F comprises an energy meter which measures said energy provided to the heating element over time; most preferably, said energy is expressed in Wh.

Furthermore, preferably, said system F comprises a time counter able to detect the time t1 elapsed since the energy calculation provided to the heating element has been activated to when said energy measurement reaches the predefined amount E1.

Under standard conditions, i.e. in the environmental conditions such as ambient temperature and thermal insulation with which the appliance is insulated as defined by the safety standards IEC60335-2-17, the energy absorbed by the heating element is measurable and has a well-defined and repeatable value. It is therefore easily possible to predefine said amount of energy provided to the heating element E1.

Preferably, said system F is able to determine the possible variation of said temperature TR of the heating element based on a comparison between the time t1 required to reach said energy value E1 and a predefined time t2.

Preferably, if from said comparison it appears that t1 is greater than t2 (t1> t2), said system F determines the reduction of temperature TR of the heating element so as to low the temperature of said outer surface of the heating device.

Therefore, if the temperature difference between the heating element and the environment is low, or if the product is used in the insulated form, the energy provided to the heating element will be low, and the outer surface of the heating device will be hotter than in standard conditions.

Preferably, in this case, said system F determines the reduction of temperature TR of the heating element so that the temperature of the outer surface of the heating device is reduced, falling within the safety limits provided by the safety standard IEC 60335-2-17, i.e. below 50 °C, preferably, in the range between about 40 °C and 50 °C.

Vice versa, if from said comparison it appears that t1 is less than or equal to t2 (t1 ≤ t2), in an embodiment said system F determines that the temperature TR of the heating element remains substantially unaltered. In another embodiment, said system F determines the increase of the temperature TR of the heating element up to an appropriate value.

More preferably, if t1 is less than 90% of the value of t2, said system F determines the increase of the temperature TR of the heating element of a value of at least 5 °C.

Even more preferably, if t1 is less than 80% of the value of t2, said system F determines the increase of the temperature TR of the heating element of a value of at least 10 °C.

This way, if the temperature difference between the heating element and the environment is high, or if the product is used in the open air, the energy provided to the heating element will be high, and the outer surface of the heating device will be colder than in standard conditions. By increasing the temperature TR of the heating element, more comforts are assured to the user even in cold environments.

Preferably, said heating device is also provided with an auto-off device able to switch off the heating element after a pre-determined period of time; most preferably, said heating device automatically switch off approximately 3 hours after the ignition.

This way, the heating device is provided with an additional device for the user safety.

Therefore, the Applicant of the present application has observed that the heating device is particularly useful for increasing performance when the device is used in place over the person (and then uncovered, that is directly in contact with the air), while maintaining the safety principle consisting in a not high outer surface temperature when said heating device is used in a covered and/or suffocated state, and thus improved compared to conventional products that provide poor performance when used in the open air.

In a second embodiment, said system F is able to determine the possible variation of the temperature TR of said heating element according to the amount E2 of said energy provided to the heating element itself in a pre-determined period of time t3, by comparing said energy E2 with a pre-defined energy E3.

Similarly to what has been seen above with reference to the first embodiment, if by comparing said values of energy provided to the heating element it appears that E2 is lower than E3 (E2 <E3), preferably said system F determines the reduction of the temperature TR of the heating element so as to lower the temperature of said outer surface of the heating device.

Vice versa, if from said comparison it appears that E2 is greater than or equal to E3 (E2 ≥ E3), in an embodiment said system F determines that the temperature TR of the heating element remains substantially unaltered. In another embodiment, said system F determines the increase of the temperature TR of the heating element up to an appropriate value.

Preferably, if from such described above energies comparison it appears that E2 is considerably greater than E3, e.g. E2 is greater than a value that is equal to the E3 value increased by 10%, said system F determines the increase of the temperature TR of the heating element of about 5 °C.

More preferably, if from such described above energies comparison it appears that E2 is greater than a value that is equal to the E3 value increased by 20%, said system F determines the increase of the temperature TR of the heating element of about 10 °C, in order to ensure more comforts even in very cold environments.

In a second aspect, the present invention relates to a method for regulating the heating device temperature as the one indicated in claim 13.

The Applicant of the present application has in fact surprisingly found that a method for possibly vary the temperature TR of the heating element positioned within the main body of a heating device, characterized in that said possible variation of temperature TR is according to the amount of energy provided to said heating element,
is able to maintain said outer surface temperature of the heating device within predetermined limits of efficiency and safety to the user.

Preferably, said method adjusts the outer surface temperature of a heating device such as the described above heating device.

In one embodiment, preferably the method of the present invention comprises the following steps:
a) adjusting the temperature TR of the heating element 2;
b) measuring the amount of energy provided to said heating element, expressed in Wh;
c) detecting the elapsed time t1 required to allow said energy amount provided to the heating element 2 to be equal to a pre-defined value E1;
d) comparing said detected time t1 with a pre-defined time value t2;
e) possibly varying said temperature TR of said heating element 2 according to said comparison between t1 and t2.

In another alternative embodiment, preferably the method of the present invention comprises the following steps:
a) adjusting the temperature TR of the heating element 2;
b) measuring a period of time during which energy is provided to said heating element 2;
c) detecting the amount of energy E2, expressed in Wh, provided to said heating element 2 in a pre-defined time t3;
d) comparing said detected energy E2 with a pre-defined energy value E3;
e) possibly varying said temperature TR of said heating element 2 according to said comparison between E2 and E3.

Further characteristics and advantages of the present invention will become more apparent from an examination of the following detailed description of a preferred embodiment, but not exclusive, illustrated only by way of non-limiting example, with the support of the attached drawings, in which:
- Figure 1 is a schematic view of an embodiment of a heating device of the present application;
- Figure 2 shows a graph of the performance of a heating pad of the invention in "covered" position;
- Figure 3 shows a comparison graph between the performance of a heating pad of the invention (track 1) and a conventional heating pad, in "uncovered" position (track 2);
- Figure 4 shows a graph of the performance of a heating pad of the invention in "uncovered" position showing a time t1 much smaller than the predefined time t2;
- Figure 5 shows a block diagram referring to an embodiment of the method of the present application to adjust the temperature of a heating device.

### Detailed Description.

The following detailed description refers to a particular embodiment of a heating device according to the present invention, without limiting the content thereof.

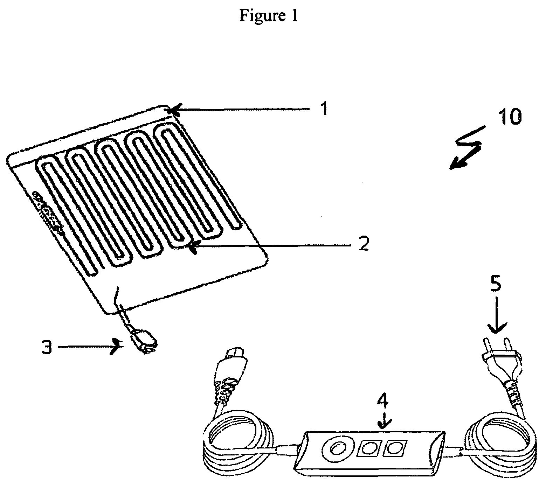

Referring to Figure 1, a heating device 10 according to the present invention (herin also defined as a heating pad TF1) is described, comprising a main body 1 having an outer surface, which is that one which comes into contact with a portion of the user body to be heated; inside the main body 1 is housed the heating element 2, constituted by an electrical wire arranged in serpentine. From this structure an electric cable protrudes and, optionally, also protrudes a connector 3 which connects the heating element 2 to a control and adjustment device 4, which will be connected in turn to a battery or to a power source (not shown) through another electric cable 5.

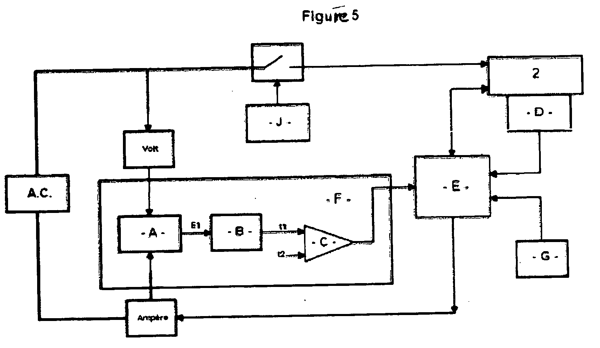

With reference to Figure 5, a block diagram is shown that describes the method to adjust the temperature implemented within the control and adjustment device 4 of the heating pad TF1 of Figure 1 according to an embodiment of the present application.

In this embodiment, the user pre-sets the initial temperature TR of the heating element 2 equal to about 80 °C (step G); one sensor D, which exploits the impedance variation of at least one conductor of the heating element 2 when the temperature varies, sends a signal to the regulator E which provide to keep the temperature TR to the pre-set value.

The system F measures the amount of energy provided to the heating element 2 as follows. An energy meter measures the energy E1 transferred to the heating element 2 over time (phase A), a time counter detects the time t1 which has elapsed since the meter of energy provided to the heating element 2 has been activated up to when the energy amount provided to the heating element 2 is equal to a predefined amount E1 (phase B), a comparison device compares the time t1 detected by the time counter with a preset time t2 (step C).

The comparison result between t1 and t2 determines the action type that the system F induces the regulator E to apply, i.e. the temperature TR variation, by decreasing it (if t1> t2), or by possibly increasing it (if t1 ≤ t2).

For greater safety, the heating pad TF1 is also provided with an auto-off device (step J), for switching off the heating pad in any case for example 3 hours after the ignition, in order to avoid that the product remains forgotten unnecessarily turned on for long time.

### Examples.

### Example 1 (invention)

Heating pad TF1 of the invention was placed in the "covered" position in a special test bed as defined by the safety standard IEC 60335-2-17.

Predefined energy values E1 were set to be 5 Wh, and time t2 was set at 30 minutes.

Heating pad TF1 was then activated, by connecting the electric cable 5 to a power outlet; the heating element 2 was then brought to a initial constant temperature TR equal to 80 °C.

In such a covered position in the test bed, the heating pad TF1, being more insulated and therefore failing to come in contact with the environment, quickly reached high temperatures and with low energy waste.

After 40 minutes the device F detected that the predefined value E1 of energy provided to the heating element 2 had been reached.

Being such a time value t1 measured after 40 minutes greater than the predefined time t2 (30 minutes), this meant that the time t1 required to provide the predefined energy E1 of 5 Wh to the heating element 2 of the heating pad TF1 was high. In this case, the system F induced the regulator E to reduce the temperature TR of the heating element 2 to a value lower than 50 °C, so as to lower the outer surface temperature of the heating pad TF1 and keep it within acceptable limits for the user.

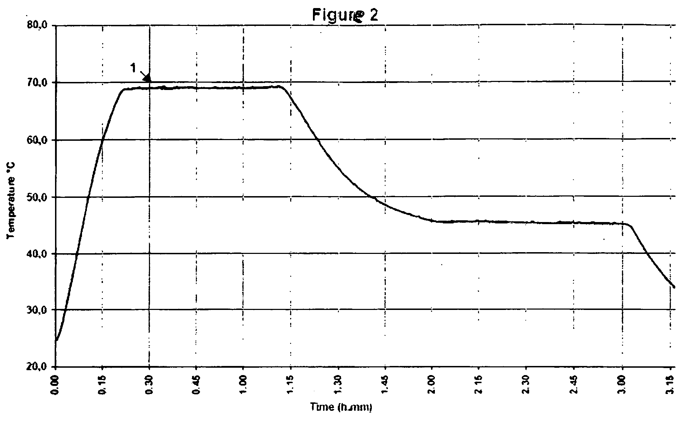

The example of temperature graph of the outer surface of the heating pad TF1 according to the invention is shown in Figure 2.

### Example 2 (invention)

The above described heating pad TF1 of the invention was placed, on one hand, in direct contact with the user body in a suitable position (belly, back or other anatomical part) and, on the other hand was covered with a cushion which constituted a thermal insulation between the heating pad TF1 and the external environment where the temperature was 20 °C.

The predefined values of energy E1 equal to 5 Wh, and time t2 equal to 30 minutes were set.

The heating pad TF1 was then activated, by connecting the electric cable 5 to a power outlet; the heating element 2 was then brought to an initial constant temperature TR equal to 80 °C.

After 40 minutes the device F detected that the predefined value E1 of energy provided to the heating element 2 had been reached.

Being such a time value t1 measured after 40 minutes greater than the predefined time t2 (30 minutes), this meant that the time t1 required to provide the predefined energy E1 of 5 Wh to the heating element 2 of the heating pad TF1 was high. In this case, the system F induced the regulator E to reduce the temperature TR of the heating element 2 to a value of 50 °C, so as to lower the outer surface temperature of the heating pad TF1 and keep it within acceptable limits for the user. The example of temperature graph of the outer surface of the heating pad TF1 according to the invention is shown in Fig 2.

The heating pad TF1 of the invention thus presented the dual advantage of allowing the outer surface of the heating pad itself to achieve, first and for a not too long time as required by the standard IEC60335-2-17, a temperature such as to give good heat transmission performance to the user body and, subsequently, to reduce such a temperature only when it could constitute a danger to the user safety, based on the energy value E1 provided to the heating element 2 housed inside the heating pad TF1.

### Example 3 (invention)

The above described heating pad TF1 was placed, on one side, in direct contact with the user body in a suitable position (belly, back or other anatomical part), as in the position defined above in Example 2, while the other side was left directly exposed to the outside environment where the temperature was 20 °C.

The E1 and t2 values were set as in Example 2.

In this case, the device F detected that the predefined value E1 of energy provided to the heating element had been reached after 28 minutes.

Being such a measured time t1 (28 minutes) shorter than the predefined time t2 (30 minutes), this meant that the time t1 required to provide the predefined energy E1 to the heating element 2 was low. In such conditions, the system F induced the regulator E to leave substantially unchanged the temperature TR of the heating element 2. In addition, for better security, the heating pad TF1, provided with the auto-switch off device mentioned above (step J), was switched off 3 hours after its ignition.

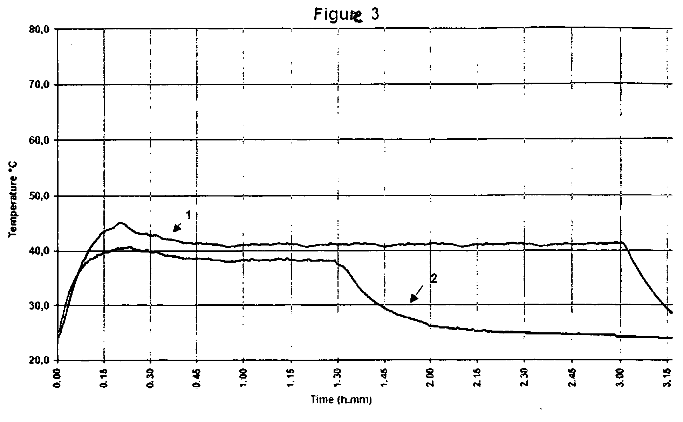

The example of a temperature graph of the outer surface of the heating pad TF1 according to the invention described in this Example 3 is shown in Fig 3, and referred to as track 1.

### Example 4 (invention)

The above described heating pad TF1 was placed in the same conditions of Example 3, with the difference that in this case the system F detected that the predefined value E1 of energy provided to the heating element had been reached after only 23 minutes.

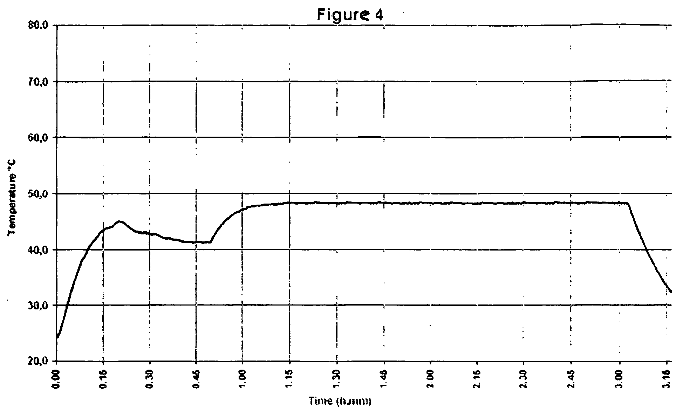

Being such a measured time t1 (23 minutes) lower than 80% of the predefined time t2 (30 minutes), this meant that the time t1 required to provide the predefined energy E1 to the heating element 2 was very low. In such conditions, the system F induced the regulator E to increase the temperature TR of the heating element 2 of 10 °C, bringing thus it up to 90 °C (see the graph of Figure 4), to compensate the considerable low environment temperature.

In this case, the heating pad of the invention TF1 allowed to its outer surface to remain longer at a sufficiently high temperature to give good heat transmission performances, but still below the danger limits for the user.

### Example 5 (comparison).

A conventional heating pad TF2, equipped with a fixed time auto-switch off device, but in absence of the F system present in the heating pad TF1 of the invention, was placed in the same position conditions of the heating pad TF1 as described in Example 3.

In the absence of the F system that allowed the heating pad TF1 to continue to provide high performance for a period of 3 hours, before the auto-switching off, the conventional heating pad TF2 switched off the heating element 2 after only 90 minutes as bound by the safety requirements imposed by the IEC 60335-2-17.

In the graph of Fig 3 a comparison between the temperature reached by the outer surface of the heating pad TF1 of the invention and that one reached by the comparison heating pad TF2 is shown, both placed in the position as described in Example 3. In this graph, the continuous track 1 shows the behavior of the heating pad TF1 of the invention, which maintained a constant temperature, as highest as possible consistent with the use conditions, as desired by the user. Instead, the dotted track 2 shows that the comparison heating pad TF2, in absence of the system F, reached sufficient values to allow a good warming of the user body, but for 90 minutes only, interrupting the heat supplying much earlier than the heating pad TF1 of the invention.

## Claims

1. Heating device (10) comprising a main body (1) able to house in its interior at least one heating element (2), wherein said heating device (10) comprises means to adjust the temperature (TR) of said heating element (2), **characterized in that** said heating device (10) further comprises a system (F) able to determine the possible variation of said temperature (TR) of the heating element (2) according to the amount of energy provided to said element heating (2).

2. Heating device (10) according to claim 1, wherein said heating device (10) is an electric-blanket, an electric bed warmer, a heating pad, a heating mat or any electrical device able to heat a bed or a floor or other similar surfaces, or to heat a human body in a bed or in any case at rest.

3. Heating device (10) according to any preceding claim 1-2, wherein the maximum value of said temperature (TR) of said heating element (2) is adjusted at a value comprised in the range between 50 °C and 90 °C.

4. Heating device (10) according to any preceding claim 1-3, wherein said system (F) is able to determine the possible variation of said temperature (TR) of said heating element (2) according to the amount of time (t1) needed to provide a pre-determined amount (E1) of said energy to the heating element (2).

5. Heating device (10) according to any preceding claim 1-4, wherein said system (F) comprises an energy measuring device (A) which measures said energy and a time counter (B) able to detect the time (t1) elapsed from the time in which said measurement of the energy provided to the heating element (2) has been activated to the time in which said energy measurement reaches said predefined energy amount (E1).

6. Heating device (10) according to any preceding claim 1-5, wherein said system (F) is able to determine the possible variation of said temperature (TR) of the heating element (2) according to the comparison between said detected time (t1) and a predefined time (t2).

7. Heating device (10) according to claim 6, wherein, if from said comparison it results that (t1) > (t2), said system (F) determines the reduction of said temperature (TR) of the heating element (2); vice versa, if it results that (t1) ≤ (t2), said system (F) determines the possible increase of said temperature (TR) of the heating element (2).

8. Heating device (10) according to claim 7, wherein, if (t1) is lower than 90% of (t2), said system (F) determines the increasing of said temperature (TR) of the heating element (2) of a value of at least 5 °C.

9. Heating device (10) according to claim 7 or 8, wherein, if (t1) is lower than 80% of (t2), said system (F) determines the increasing of said temperature (TR) of the heating element (2) of a value of at least 10 °C.

10. Heating device (10) according to claim 7, wherein, if from said comparison it results that (t1) ≤ (t2), said system (F) determines that said temperature (TR) of the heating element (2) remains substantially unvaried.

11. Heating device (10) according to any preceding claim 1-3, wherein said system (F) is able to determine the possible variation of said temperature (TR) of the heating element (2) according to the amount (E2) of said energy provided to the heating element (2) in a pre-determined period of time (t3), by comparing said energy (E2) with a pre-defined amount of energy (E3).

12. Method for possibly vary the temperature (TR) of a heating element (2) positioned within the main body (1) of a heating device (10), **characterized in that** said possible variation of temperature (TR) is determined according to the amount of energy provided to said heating element (2).

13. Method according to claim 12, wherein said method possibly varies the temperature (TR) of said heating element (2) positioned within a heating device (10) as described in any one of claims 1-11.

14. Method according to claim 12 or 13, comprising the following steps:
a) adjusting the temperature (TR) of the heating element (2);
b) measuring the amount of energy provided to said heating element (2), expressed in Wh;
c) detecting the elapsed time (t1) required to allow said energy amount provided to the heating element (2) to be equal to a pre-defined value (E1);
d) comparing said detected time (t1) with a pre-defined time value (t2);
e) possibly varying said temperature (TR) of said heating element (2) according to said comparison between (t1) and (t2).

15. Method according to claim 12 or 13, comprising the following steps:
a) adjusting the temperature (TR) of the heating element (2);
b) measuring a period of time during which energy is provided to said heating element (2);
c) detecting the amount of energy (E2), expressed in Wh, provided to said heating element (2) in a pre-defined time (t3);
d) comparing said detected energy (E2) with a pre-defined energy value (E3);
e) possibly varying said temperature (TR) of said heating element (2) according to said comparison between (E2) and (E3).

## Patentansprüche

1. Heizgerät (10), das einen Hauptkörper (1) umfasst, der in der Lage ist, in seinem Inneren mindestens ein Heizelement (2) aufzunehmen, wobei besagtes Heizgerät (10) Mittel umfasst, um die Temperatur (TR) des besagten Heizelements (2) einzustellen, dadurch ausgezeichnet, dass besagtes Heizgerät (10) weiter ein System (F) umfasst, das in der Lage ist, die mögliche Veränderung der besagten Temperatur (TR) des Heizelements (2) entsprechend der an besagtes Heizelement (2) gelieferten Energiemenge zu bestimmen.

2. Heizgerät (10) gemäß Anspruch 1, wobei besagtes Heizgerät (10) eine Elektrodecke, ein elektrischer Bettwärmer, ein Heizkissen, eine Heizmatte oder jede andere Vorrichtung ist, die in der Lage ist, ein Bett oder einen Fußboden oder andere ähnliche Oberflächen zu erwärmen oder um einen menschlichen Körper im Bett oder jedem Fall im Ruhezustand zu erwärmen.

3. Heizgerät (10) gemäß einem der vorherigen Ansprüche 1-2, wobei der Maximalwert der besagten Temperatur (TR) des besagten Heizelements (2) bei einem Wert eingestellt ist, der im Bereich zwischen 50 °C und 90 °C liegt.

4. Heizgerät (10) gemäß einem der vorherigen Ansprüche 1-3, wobei besagtes System (F) in der Lage ist, die mögliche Veränderung der besagten Temperatur (TR) des besagten Heizelements (2) entsprechend der Zeitspanne (t1), die erforderlich ist, um eine vorbestimmte Menge (E1) der besagten Energie an das Heizelement (2) zu liefern, zu bestimmen.

5. Heizgerät (10) gemäß einem der vorherigen Ansprüche 1-4, wobei besagtes System (F) eine Energiemessvorrichtung umfasst (A), welche besagte Energie misst und einen Zeitzähler (B), der in der Lage ist, die Zeit zu erfassen (t1), die ab dem Zeitpunkt, in welchem besagte Messung der Energie, die an das Heizelement (2) geliefert wurde, aktiviert wurde bis zu dem Zeitpunkt, ab welchem besagte Energiemessung besagte vorbestimmte Energiemenge (E1) erreicht, verstrichen ist.

6. Heizgerät (10) gemäß einem der vorherigen Ansprüche 1-5, wobei besagtes System (F) in der Lage ist, eine mögliche Veränderung der besagten Temperatur (TR) des Heizelements (2) entsprechend dem Vergleich zwischen besagter erfasster Zeit (t1) und einer vorbestimmten Zeit (t2) zu erfassen.

7. Heizgerät (10) gemäß Anspruch 6, wobei, wenn sich aus diesem Vergleich ergibt, dass (t1) > (t2), besagtes System (F) die Reduktion der besagten Temperatur (TR) des Heizelements (2) bestimmt; umgekehrt, wenn sich ergibt, dass (t1) ≤ (t2), bestimmt besagtes System (F) die mögliche Erhöhung der Temperatur (TR) des Heizelements (2);

8. Heizgerät (10) gemäß Anspruch 7, wobei, wenn (t1) niedriger als 90% von (t2) ist, besagtes System (F) die Erhöhung der besagten Temperatur (TR) des Heizelements (2) um einen Wert von mindestens 5 °C bestimmt.

9. Heizgerät (10) gemäß Anspruch 7 oder 8, wobei, wenn (t1) niedriger als 80% von (t2) ist, besagtes System (F) die Erhöhung der besagten Temperatur (TR) des Heizelements (2) um einen Wert von mindestens 10 °C bestimmt.

10. Heizgerät (10) gemäß Anspruch 7, wobei, wenn sich aus diesem Vergleich ergibt, dass (t1) ≤ (t2), t besagtes System (F) bestimmt, dass besagte Temperatur (TR) des Heizelements (2) im Wesentlichen unverändert bleibt;

11. Heizgerät (10) gemäß einem der vorherigen Ansprüche 1-3, wobei besagtes System (F) in der Lage ist, die mögliche Veränderung der besagten Temperatur (TR) des besagten Heizelements (2) entsprechend der Menge (E2) der an das Heizelement gelieferten besagten Energie (2) in einer vorbestimmten Zeitspanne (t3) durch Vergleich besagter Energie (E2) mit einer vorbestimmten Menge an Energie (E3) zu bestimmen.

12. Methode für mögliche Veränderung der Temperatur (TR) eines Heizelements (2), das innerhalb des Hauptkörpers (1) eines Heizgeräts (10) positioniert ist, dadurch ausgezeichnet, dass mögliche Veränderung der Temperatur (TR) entsprechend der Menge an Energie, die an besagtes Heizelement geliefert (2) wird, bestimmt wird.

13. Methode gemäß Anspruch 12, wobei besagte Methode möglicherweise die Temperatur (TR) des besagten Heizelement (2), das innerhalb eines Heizgeräts (10) positioniert ist, verändert, wie in einem der Ansprüche 1-11 beschrieben.

14. Methode gemäß Anspruch 12 oder 13, die die folgenden Schritte umfasst:
a) Einstellung der Temperatur (TR) des Heizelements (2);
b) Messung der Menge an Energie, die an besagtes Heizelement geliefert (2) wird, ausgedrückt in Wh;
c) Erfassung der verstrichenen Zeit (t1), die erforderlich ist, um zu ermöglichen, dass besagte Menge an Energie, die an das Heizelement (2) geliefert wird, gleich einem vorbestimmten Wert (E1) ist;
d) Vergleich der erfassten Zeit (t1) mit einem vorbestimmten Zeitwert (t2);
e) mögliche Veränderung besagter Temperatur (TR) des besagten Heizelements (2) entsprechend dem besagten Vergleich zwischen (t1) und (t2).

15. Methode gemäß Anspruch 12 oder 13, die die folgenden Schritte umfasst:
a) Einstellung der Temperatur (TR) des Heizelements (2);
b) Messung des Zeitraums während welchem Energie an besagtes Heizelement (2) geliefert wird;
c) Erfassung der Menge an Energie (E2), ausgedrückt in Wh, die in einer vordefinierten Zeit (t3) an das Heizelement (2) geliefert wird;
d) Vergleich der erfassten Energie(E2) mit einem vorbestimmten Energiewert (E3);
e) mögliche Veränderung besagter Temperatur (TR) des besagten Heizelements (2) entsprechend dem besagten Vergleich zwischen (E2) und (E3).

## Revendications

1. Appareil de chauffage (10) comprenant un corps principal (1) apte à loger en son intérieur au moins un élément de chauffage (2), dans lequel ledit appareil de chauffage (10) comprend des moyens pour régler la température (TR) dudit élément chauffant (2), **caractérisé en ce que** le dit appareil de chauffage (10) comprend en outre un système (F) apte à déterminer la variation possible de cette température (TR) de l'élément de chauffage (2) en fonction de la quantité d'énergie fournie à l'élément chauffant (2).

2. Appareil de chauffage (10) selon la revendication 1, dans laquelle ledit appareil de chauffage (10) est une couverture chauffante, un lit chauffant électrique, un coussin chauffant, un tapis de chauffage ou tout autre appareil électrique capable de chauffer un lit ou un sol ou d'autres surfaces similaires, ou pour chauffer un corps humain dans un lit ou en tout cas au repos.

3. Appareil de chauffage (10) selon l'une des quelques revendications précédentes 1-2, dans lequel le ladite valeur maximale de température (TR) dudit élément chauffant (2) est ajustée à une valeur comprise dans l'intervalle entre 50 °C et 90 °C.

4. Appareil de chauffage (10) selon une quelque revendication précédente 1 à 3, dans lequel ledit système (F) est en mesure de déterminer la variation possible de cette température (TR) dudit élément chauffant (2) selon la quantité de temps (t 1) nécessaire pour fournir une quantité prédéterminée (E 1) de ladite énergie à l'élément de chauffage (2).

5. Appareil de chauffage (10) selon une quelconque revendication précédente 1 à 4, dans lequel ledit système (F) comprend un appareil de mesure d'énergie (A) qui mesure ladite énergie et un compteur de temps (B) capable de détecter le moment (t1) écoulé à partir du moment où ladite mesure de l'énergie fournie à l'élément chauffant (2) a été activée au moment où ladite mesure de l'énergie atteint ladite quantité d'énergie prédéfinie (E1).

6. Appareil de chauffage (10) selon une quelconque revendication précédente 1 à 5, dans lequel ledit système (F) est en mesure de déterminer la variation possible de cette température (TR) de l'élément de chauffage (2) en fonction de la comparaison entre ledit temps détecté (t1) et un temps prédéfini (t2).

7. Appareil de chauffage (10) selon la revendication 6, dans lequel, si de ladite comparaison il en résulte que (t1)> (t2), ledit système (F) détermine la réduction de ladite température (TR) de l'élément de chauffage (2); et vice versa, si il en résulte que (t1) < (t2), ledit système (F) détermine l'augmentation possible de ladite température (TR) de l'élément de chauffage (2).

8. Appareil de chauffage (10) selon la revendication 7, dans lequel, si (t1) est inférieure à 90% de (t2), ledit système (F) détermine l'augmentation de ladite température (TR) de l'élément de chauffage (2) d'une valeur d'au moins 5 °C.

9. Appareil de chauffage (10) selon la revendication 7 ou 8, dans lequel, si (t1) est inférieure à 80% de (t2), ledit système (F) détermine l'augmentation de ladite température (TR) de l'élément de chauffage (2) d'une valeur d'au moins 10 °C.

10. Appareil de chauffage (10) selon la revendication 7, dans lequel, si à partir de ladite comparaison il résulte que (t1) <(t2), ledit système (F) détermine que ladite température (TR) de l'élément de chauffage (2) reste sensiblement invariable.

11. Appareil de chauffage (10) selon une quelconque revendication précédente 1 à 3, dans lequel ledit système (F) est en mesure de déterminer la variation possible de cette température (TR) de l'élément de chauffage (2) en fonction de la quantité (E2) de ladite énergie fournie à l'élément chauffant (2) dans une période prédéterminée de temps (t3), en comparant ladite énergie (E2) avec une quantité d'énergie prédéterminée (E3).

12. Procédé de possible différenciation de la température (TR) d'un élément de chauffage (2) positionnée à l'intérieur du corps principal (1) d'un dispositif de chauffage (10), **caractérisé en ce que** la dite possible variation de température (TR) est déterminée en fonction de la quantité d'énergie fournie au dit élément de chauffage (2).

13. Procédé selon la revendication 12, dans lequel ledit procédé possible varie de la température (TR) dudit élément chauffant (2) positionné à l'intérieur d'un appareil de chauffage (10) décrit dans l'une des quelconques procédures 1-11.

14. Procédé selon les revendications 12 ou 13, comprenant les étapes suivantes:
a) l'ajustement de la température (TR) de l'élément de chauffage (2);
b) mesurer la quantité d'énergie fournie audit élément chauffant (2), exprimée en Wh;
c) la détection du temps écoulé (t1) nécessaire pour permettre à ladite quantité d'énergie fournie à l'élément de chauffage (2) d'être égale à une valeur prédéfinie (E1);
d) comparer ledit temps détecté (t 1) avec une valeur de temps prédéfinie (T2);
e) éventuellement, faire varier ladite température (TR) dudit élément chauffant (2) en fonction de ladite comparaison entre (t1) et (t2).

15. Procédé selon les revendications 12 ou 13, comprenant les étapes suivantes:
a) ajustement de la température (TR) de l'élément de chauffage (2);
b) mesurer une période de temps pendant laquelle l'énergie est fournie audit élément chauffant (2);
c) la détection de la quantité d'énergie (E2), exprimée en Wh, prévu sur ledit élément de chauffage (2) dans un temps prédéfini (t3);
d) la comparaison de ladite énergie détectée (E2) avec une valeur prédéfinie de l'énergie (E3);
e) éventuellement, faire varier ladite température (TR) dudit élément chauffant (2) selon la ladite comparaison entre (E2) et (E3).
